(19) Europäisches Patentamt / European Patent Office / Office européen des brevets

(11) **EP 3 847 074 B1**

(12) **EUROPÄISCHE PATENTSCHRIFT**

(45) Veröffentlichungstag und Bekanntmachung des Hinweises auf die Patenterteilung:
**12.07.2023   Patentblatt 2023/28**

(21) Anmeldenummer: **19801689.1**

(22) Anmeldetag: **24.10.2019**

(51) Internationale Patentklassifikation (IPC):
**B61F 9/00** *(2006.01)*      **B61L 15/00** *(2006.01)*

(52) Gemeinsame Patentklassifikation (CPC):
**B61F 9/005; B61L 15/0081**

(86) Internationale Anmeldenummer:
**PCT/EP2019/079061**

(87) Internationale Veröffentlichungsnummer:
**WO 2020/089035 (07.05.2020 Gazette 2020/19)**

(54) **VERFAHREN UND VORRICHTUNG ZUR DETEKTION EINES ENTGLEISUNGSZUSTANDS EINES SCHIENENFAHRZEUGS**

METHOD AND DEVICE FOR DETECTING A DERAILMENT STATE OF A RAIL VEHICLE

PROCÉDÉ ET DISPOSITIF DE DÉTECTION D'UN ÉTAT DE DÉRAILLEMENT D'UN VÉHICULE SUR RAILS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.10.2018   AT 509362018**

(43) Veröffentlichungstag der Anmeldung:
**14.07.2021   Patentblatt 2021/28**

(73) Patentinhaber: **Siemens Mobility Austria GmbH**
**1210 Wien (AT)**

(72) Erfinder:
• **KITZMÜLLER, Christian**
 **8010 Graz (AT)**
• **KOLLER, Andreas**
 **8733 Sankt Marein bei Knittelfeld (AT)**
• **SIMON, Johannes**
 **8043 Graz (AT)**

(74) Vertreter: **Siemens Patent Attorneys**
**Postfach 22 16 34**
**80506 München (DE)**

(56) Entgegenhaltungen:
EP-A1- 1 400 427      WO-A1-2004/009420
DE-C1- 19 953 677     JP-A- H0 939 790

**Beschreibung**

Die Erfindung bezieht sich auf ein Verfahren zur Detektion eines Entgleisungszustands eines Schienenfahrzeugs, wobei zumindest eine kinematische Größe mittels eines ersten Sensors bezüglich eines ersten Radsatzendabschnitts und mittels eines zweiten Sensors bezüglich eines zweiten Radsatzendabschnitts gemessen wird und entsprechende Messsignale gebildet, verarbeitet sowie ausgewertet werden.

Schienenfahrzeuge müssen eine hohe Fahrsicherheit aufweisen. Eine genaue Einschätzung und Vorhersage von technischen Zuständen von Fahrzeugen, Fahrwerken und weiteren Fahrzeugkomponenten ist daher wichtig. Insbesondere können Entgleisungen des Schienenfahrzeugs schwere Schäden an Mensch und Umwelt sowie an dem Schienenfahrzeug selbst verursachen, weshalb eine genaue und rechtzeitige Erkennung eines Entgleisungszustands des Schienenfahrzeugs bedeutsam ist. Beispielsweise sind für einen automatischen Fahrbetrieb nach GoA 4(Grade of Automation, Stufe 4) laut IEC (International Electrotechnical Commission) 62267 Mittel zur Entgleisungsdetektion vorgeschrieben.

Aus dem Stand der Technik ist beispielsweise die WO 2004/101343 A1 bekannt, in welcher ein Verfahren sowie eine Vorrichtung zur Detektion einer Entgleisung von Schienenfahrzeugrädern offenbart ist. Aus Messsignalen eines Beschleunigungssensors, welcher auf einem Radsatzlager eines Schienenfahrzeugs vorgesehen ist, werden mittels Integration Fallgeschwindigkeiten der Schienenfahrzeugräder ermittelt und eine Entgleisung dann detektiert, wenn eine Fallgeschwindigkeit einen definierten Grenzwert überschreitet. Weiterhin ist eine Detektion einer Entgleisung auch anhand eines Fallgeschwindigkeitsverlaufs vorgesehen. Dieser Ansatz weist in seiner bekannten Form den Nachteil ungenauer Detektionsergebnisse auf.

Weiterhin zeigt die DE 199 53 677 C1 ein Verfahren und eine Vorrichtung zur Entgleisungsdetektion bei einem Schienenfahrzeug, wobei mittels eines Beschleunigungssensors, welcher auf einem mit einem Radsatzlagergehäuse eines Fahrwerks des Schienenfahrzeugs verbundenen Bauteil angeordnet ist, Beschleunigungen vertikal und/oder quer zu einer Fahrtrichtung erfasst werden. Die Beschleunigungen werden mit Grenzwerten verglichen, wobei anhand einer Grenzwertverletzung eine Entgleisung detektiert wird.

Der Erfindung liegt daher die Aufgabe zugrunde, ein gegenüber dem Stand der Technik weiterentwickeltes Verfahren anzugeben, welches eine besser abgesicherte bzw. zuverlässigere Detektion von Entgleisungszuständen eines Schienenfahrzeugs ermöglicht.

Erfindungsgemäß wird diese Aufgabe gelöst mit einem Verfahren der eingangs genannten Art, bei dem mittels zumindest einer Recheneinheit aus den Messsignalen Werte einer ersten Fallgeschwindigkeit bezüglich des ersten Radsatzendabschnitts und Werte einer zweiten Fallgeschwindigkeit bezüglich des zweiten Radsatzendabschnitts gebildet werden und mittels eines ersten Vergleichsvorgangs der ersten Fallgeschwindigkeit und der zweiten Fallgeschwindigkeit mit einem ersten Fallgeschwindigkeitsgrenzwert und einem zweiten Fallgeschwindigkeitsgrenzwert, welcher betragsmäßig größer ist als der erste Fallgeschwindigkeitsgrenzwert, ein Entgleisungszustand des Schienenfahrzeugs zumindest dann detektiert wird, wenn die erste Fallgeschwindigkeit betragsmäßig gleich oder größer ist als der erste Fallgeschwindigkeitsgrenzwert und die zweite Fallgeschwindigkeit betragsmäßig gleich oder größer ist als der zweite Fallgeschwindigkeitsgrenzwert.

Durch Erfassung und Auswertung kinematischer Informationen bezüglich beider Radsatzenden, d. h. bezüglich des ersten Radsatzendabschnitts und des zweiten Radsatzendabschnitts, wird eine vorteilhafte Absicherung von Detektionsergebnissen im Hinblick auf einen Entgleisungszustand des Schienenfahrzeugs erzielt. Bei einem Entgleisungsvorgang klettert zunächst ein erstes Rad eines Radsatzes auf einen Schienenkopf auf und gleitet anschließend von diesem ab. Infolge eines geometrischen bzw. kinematischen Zusammenspiels von Spurweiten, Radrückenabständen und Radprofilen entgleist danach, innerhalb einer begrenzten Wegstrecke entlang der Schienen bzw. innerhalb eines begrenzten Zeitraums auf das erste Rad folgend, ein zweites Rad desselben Radsatzes.

Der beschriebene Entgleisungsvorgang wird messtechnisch in vorteilhafter Weise erfasst, da an beiden Radsatzenden Messungen durchgeführt werden und Fallgeschwindigkeiten, d.h. die erste Fallgeschwindigkeit und die zweite Fallgeschwindigkeit, mit zwei unterschiedlichen Fallgeschwindigkeitsgrenzwerten, d.h. dem ersten Fallgeschwindigkeitsgrenzwert und dem zweiten Fallgeschwindigkeitsgrenzwert, verglichen werden.

Der zweite Fallgeschwindigkeitsgrenzwert bezieht sich auf ein nachfolgend entgleisendes Rad und ist betragsmäßig größer als der auf ein anfänglich entgleisendes Rad bezogene, erste Fallgeschwindigkeitsgrenzwert.

Werden an dem Radsatz aufeinanderfolgend sowohl eine Entgleisung in Richtung einer Schienenaußenseite als auch eine Entgleisung in Richtung einer Schieneninnenseite festgestellt, so wird ein Entgleisungszustand des Radsatzes bzw. des Schienenfahrzeugs detektiert. Dadurch Einbeziehung beider Räder des Radsatzes in das erfindungsgemäße Verfahren wird ein Risiko von Fehlalarmen reduziert.

Es ist günstig, dass mittels der zumindest einen Recheneinheit aus den Messsignalen Werte eines erster Fallwegs bezüglich des ersten Radsatzendabschnitts und Werte eines zweiten Fallwegs bezüglich des zweiten Radsatzendabschnitts gebildet werden und mittels eines zweiten Vergleichsvorgangs des ersten Fallwegs und des zweiten Fallwegs mit einem ersten Fallwegsgrenzwert und einem zweiten Fallwegsgrenzwert, welcher betragsmäßig kleiner ist als der erste Fallwegsgrenzwert, ein Entgleisungszustand des Schienenfahrzeugs zumindest dann detektiert wird, wenn der erste Fallweg betragsmäßig gleich oder größer ist als der erste Fallwegsgrenzwert und der zweite Fallweg betragsmäßig gleich oder größer ist als der zweite Fallwegsgrenzwert. Durch Einbeziehung von Fallwegen in das erfindungsgemäße Verfahren, d.h. des ersten Fallwegs bezüglich des ersten Rads des Radsatzes und des zweiten Fallwegs bezüglich des zweiten Rads des Radsatzes, wird eine Detektion eines Entgleisungszustands des Schienenfahrzeugs zusätzlich abgesichert. Das Risiko von Fehlalarmen im Hinblick auf eine Feststellung von Entgleisungszuständen wird weiter reduziert.

Eine Steigerung einer Detektionsgenauigkeit wird ferner erzielt, wenn ein Entgleisungszustand des Schienenfahrzeugs zumindest dann detektiert wird, wenn ein Erreichen oder ein Überschreiten des ersten Fallgeschwindigkeitsgrenzwerts und des zweiten Fallgeschwindigkeitsgrenzwerts durch die erste Fallgeschwindigkeit und die zweite Fallgeschwindigkeit innerhalb einer Übergangszeit oder innerhalb einer Übergangswegstrecke erfolgt.

Durch diese Maßnahme wird eine Kopplung einer Entgleisung des ersten Rads mit einer Entgleisung des zweiten Rads berücksichtigt.

Eine vorteilhafte Ausgestaltung erhält man, wenn eine Zwangsbremsung des Schienenfahrzeugs ausgelöst wird, wenn ein Entgleisungszustand des Schienenfahrzeugs detektiert wird. Durch diese Maßnahme wird eine möglichst rasche Wiederherstellung eines sicheren Zustands des Schienenfahrzeugs, seiner Insassen und seiner Fracht etc. erreicht.

Eine günstige Lösung wird erzielt, wenn Informationen über einen Entgleisungszustand des Schienenfahrzeugs mittels Funk von dem Schienenfahrzeug an eine infrastrukturseitige Einrichtung übertragen werden.

Durch diese Maßnahme können im Fall einer Entgleisung des Schienenfahrzeugs rasch Einsatzorganisationen zur Bergung des Schienenfahrzeugs, Versorgung von Insassen etc. aktiviert werden und Ersatzverkehre etc. eingerichtet werden.

Weiterhin kann es auch vorteilhaft sein, wenn Informationen über einen Entgleisungszustand des Schienenfahrzeugs an einen Führerstand des Schienenfahrzeugs übertragen und in dem Führerstand ausgegeben werden.

Durch diese Maßnahme wird auch ein Triebfahrzeugführer unmittelbar über die Entgleisung informiert.

Nachfolgend wird die Erfindung anhand von Ausführungsbeispielen näher erläutert.

Es zeigen beispielhaft:

Fig. 1: Ein Fahrwerk eines Schienenfahrzeugs mit einem ersten Sensor und einem zweiten Sensor sowie einen Wagenkasten des Schienenfahrzeugs mit einer Recheneinheit, wobei der erste Sensor und der zweite Sensor signalübertragend mit der Recheneinheit verbunden sind,

Fig. 2: Einen ersten Radsatz eines Schienenfahrzeugs während einer Entgleisung, und

Fig. 3: Ein Flussdiagramm zu einer beispielhaften Ausführungsvariante eines erfindungsgemäßen Verfahrens zur Detektion von Entgleisungszuständen eines Schienenfahrzeugs.

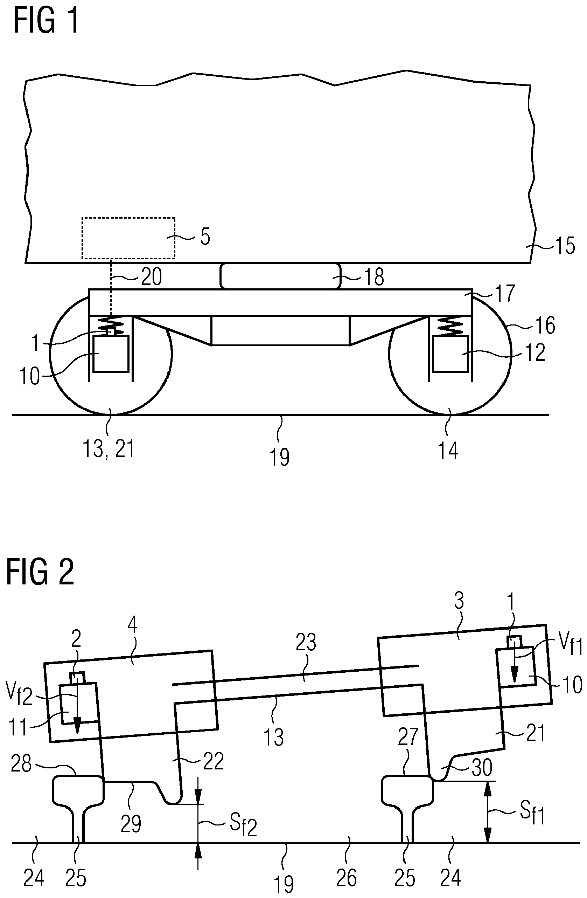

Fig. 1 zeigt ein beispielhaftes Schienenfahrzeug mit einem Fahrwerk 16 und einem Wagenkasten 15.

Das Fahrwerk 16 umfasst einen primärgefederten Fahrwerksrahmen 17, welcher über ein erstes Radsatzlager, welches ein erstes Radsatzlagergehäuse 10 aufweist und über ein zweites Radsatzlager, welches ein in Fig. 2 sichtbares zweites Radsatzlagergehäuse 11 aufweist, mit einem ersten Radsatz 13 sowie über ein drittes Radsatzlager, welches ein drittes Radsatzlagergehäuse 12 aufweist und über ein viertes Radsatzlager, welches ein viertes Radsatzlagergehäuse aufweist, mit einem zweiten Radsatz 14 verbunden ist.

Auf dem Fahrwerksrahmen 17 ist eine Sekundärfedervorrichtung 18 angeordnet, über welche das Fahrwerk 16 mit dem Wagenkasten 15 verbunden ist.

Auf dem ersten Radsatzlagergehäuse 10 ist ein erster Sensor 1 vorgesehen, auf dem zweiten Radsatzlagergehäuse 11 ein in Fig. 2 sichtbarer, zweiter Sensor 2. Weiterhin ist auf dem dritten Radsatzlagergehäuse 12 ein dritter Sensor angeordnet und auf dem vierten Radsatzlagergehäuse ein vierter Sensor, die jedoch nicht gezeigt sind.

Mittels des ersten Sensors 1 und des zweiten Sensors 2 werden Entgleisungen des ersten Radsatzes 13 festgestellt, mittels des dritten Sensors und des vierten Sensors Entgleisungen des zweiten Radsatzes 14.

Der erste Sensor 1, der zweite Sensor 2, der dritte Sensor und der vierte Sensor sind als piezoelektrische Beschleunigungssensoren ausgeführt, welche Beschleunigungen, d.h. eine kinematische Größe, des Schienenfahrzeugs in drei Raumrichtungen messen, wobei auch Beschleunigungen normal zu einer Schienenebene 19 erfasst werden.

Erfindungsgemäß ist es jedoch auch vorstellbar, den ersten Sensor 1, den zweiten Sensor 2, den dritten Sensor und den vierten Sensor als Abstandssensoren, z.B. als Laserentfernungsmesser, oder als Geschwindigkeitssensoren, z.B. als Doppler-Radarsensor, auszuführen. Erfindungsgemäß ist weiterhin eine gemischte Ausstattung denkbar, wobei beispielsweise der erste Sensor 1 als Beschleunigungssensor ausgeführt ist und der zweite Sensor 2 als Abstandssensor bzw. als Geschwindigkeitssensor oder der erste Sensor 1 als Geschwindigkeitssensor und der zweite Sensor 2 als Abstandssensor usw.

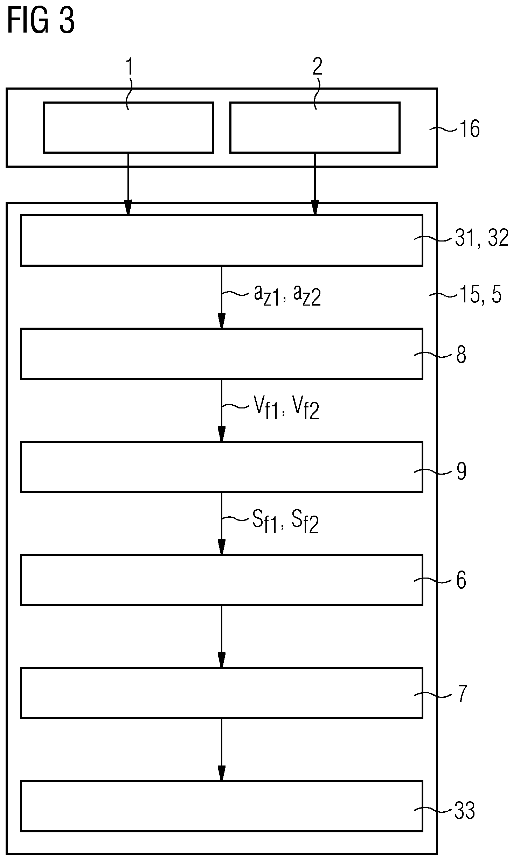

Ist keiner der Sensoren als Geschwindigkeitssensor ausgeführt, so erfolgt, wie im Zusammenhang mit Fig. 3 beschrieben, eine Transformation von mittels der Sensoren aufgenommenen Beschleunigungen oder Abständen in Fallgeschwindigkeitswerte.

Von dem ersten Sensor 1, dem zweiten Sensor 2, dem dritten Sensor und dem vierten Sensor gemessene Beschleunigungen werden als Messsignale über eine erste Kabelleitung 20, eine nicht sichtbare zweite Kabelleitung sowie, nicht dargestellt, eine dritte Kabelleitung und eine vierte Kabelleitung an eine in dem Wagenkasten 15, d.h. in einem Wagen angeordnete Recheneinheit 5 übertragen und darin zur Detektion von Entgleisungszuständen des Schienenfahrzeugs ausgewertet.

Der erste Sensor 1 ist über die erste Kabelleitung 20 mit der Recheneinheit 5 signalübertragend verbunden, der zweite Sensor 2 über die zweite Kabelleitung, der dritte Sensor über die dritte Kabelleitung und der vierte Sensor über die vierte Kabelleitung.

Die Recheneinheit 5 ist über ein nicht gezeigtes Bordstromnetz des Schienenfahrzeugs mit Elektrizität versorgt. Die Recheneinheit 5 wiederum versorgt über die erste Kabelleitung 20, die zweite Kabelleitung, die dritte Kabelleitung und die vierte Kabelleitung den ersten Sensor 1, den zweiten Sensor 2, den dritten Sensor und den vierten Sensor mit Elektrizität.

Erfindungsgemäß kann auch vorgesehen sein, dass eine Signalübertragung zwischen dem ersten Sensor 1, dem zweiten Sensor 2, dem dritten Sensor und dem vierten Sensor einerseits sowie der Recheneinheit 5 andererseits mittels einer Funkverbindung erfolgt.

In Fig. 2 ist ein beispielhafter erster Radsatz 13 eines Schienenfahrzeugs, welcher auch in Fig. 1 gezeigt ist, dargestellt.

Der erste Radsatz 13 weist ein erstes Rad 21 und ein zweites Rad 22 auf, welche über eine Radsatzwelle 23 miteinander verbunden sind. Zur Verbindung des ersten Radsatzes 13 mit einem in Fig. 1 dargestellten Fahrwerksrahmen 17 sind ein erstes Radsatzlager mit einem ersten Radsatzlagergehäuse 10 und ein zweites Radsatzlager mit einem zweiten Radsatzlagergehäuse 11 vorgesehen.

Auf dem ersten Radsatzlagergehäuse 10 ist ein erster Sensor 1 angeordnet, auf dem zweiten Radsatzlagergehäuse 11 ein zweiter Sensor 2. Der erste Sensor 1 und der zweite Sensor 2 sind als Beschleunigungssensoren ausgeführt und messen Beschleunigungen in drei Raumrichtungen, wodurch u.a. Beschleunigungen normal zu einer Schienenebene 19 erfasst werden. Der erste Sensor 1 misst Beschleunigungen bezüglich eines ersten Radsatzendabschnitts 3 bzw. bezüglich des ersten Radsatzlagergehäuses 10, der zweite Sensor 2 misst Beschleunigungen bezüglich eines zweiten Radsatzendabschnitts 4 bzw. bezüglich des zweiten Radsatzlagergehäuses 11.

Der erste Sensor 1 und der zweite Sensor 2 messen also eine kinematische Größe, nämlich die Beschleunigung bezogen auf den ersten Radsatzendabschnitt 3 und den zweiten Radsatzendabschnitt 4.

Erfindungsgemäß ist es jedoch auch vorstellbar, weitere bzw. andere kinematische Größen zu messen, z.B. Geschwindigkeiten mittels eines Geschwindigkeitssensors oder Wege bzw. Abstände zwischen dem ersten Radsatz mittels eines Abstandssensors.

Der erste Radsatzendabschnitt 3 und der zweite Radsatzendabschnitt 4 sind Randabschnitte des ersten Radsatzes 13 und umfassen, in Längsrichtung des ersten Radsatzes 13 betrachtet, jeweils rund 30 % des ersten Radsatzes 13.

Aus Beschleunigungsmesssignalen des ersten Sensors 1 und des zweiten Sensors 2 werden in einer in Fig. 1 gezeigten Recheneinheit 5 mittels eines im Zusammenhang mit Fig. 3 beschriebenen ersten Integrationsvorgangs 8 Fallgeschwindigkeitswerte des ersten Radsatzes 13 bestimmt, nämlich Werte einer ersten Fallgeschwindigkeit $v_{f1}$ bezüglich des ersten Radsatzendabschnitts 3 bzw. des ersten Radsatzlagergehäuses 10 und Werte einer zweiten Fallgeschwindigkeit $v_{f2}$ bezüglich des zweiten Radsatzendabschnitts 4 bzw. des zweiten Radsatzlagergehäuses 11. Bei der ersten Fallgeschwindigkeit $v_{f1}$ und der zweiten Fallgeschwindigkeit $v_{f2}$ handelt es sich um Geschwindigkeiten normal zu der Schienenebene 19.

In Fig. 2 ist ein Entgleisungszustand des Schienenfahrzeugs dargestellt. Das erste Rad 21 entgleist in Richtung einer Außenseite 24 eines Gleises 25, das zweite Rad 22 in Richtung einer Innenseite 26 des Gleises 25.

Die erste Fallgeschwindigkeit $v_{f1}$ ist kleiner als die zweite Fallgeschwindigkeit $v_{f2}$, jedoch größer als ein erster Fallgeschwindigkeitsgrenzwert $v_{g1}$. Die zweite Fallgeschwindigkeit $v_{f2}$ überschreitet einen zweiten Fallgeschwindigkeitsgrenzwert $v_{g2}$, welcher größer ist als der erste Fallgeschwindigkeitsgrenzwert $v_{g1}$. Der zweite Fallgeschwindigkeitsgrenzwert $v_{g2}$ ist deshalb größer als der erste Fallgeschwindigkeitsgrenzwert $v_{g1}$, da das zweite Rad 22 auf das erste Rad 21, welches auf einen ersten Schienenkopf 27 aufklettert, folgend entgleist und da folglich auf das zweite Rad 22 eine größere Vorspannung einer Primärfederung wirkt als auf das erste Rad 21.

In der Recheneinheit 5 werden mittels eines im Zusammenhang mit Fig. 3 beschriebenen zweiten Integrationsvorgangs 9 aus den Werten der ersten Fallgeschwindigkeit $v_{f1}$ Werte eines ersten Fallwegs $s_{f1}$ und aus den Werten der zweiten Fallgeschwindigkeit $v_{f2}$ Werte eines zweiten Fallwegs $s_{f2}$ bestimmt.

Bei dem ersten Fallweg $s_{f1}$ handelt es sich um einen Weg des ersten Radsatzendabschnitts 3 bzw. des ersten Radsatzlagergehäuses 10 normal zu der Schienenebene 19, bei dem zweiten Fallweg $s_{f2}$ um einen Weg des zweiten Radsatzendabschnitts 4 bzw. des zweiten Radsatzlagergehäuses 11 normal zu der Schienenebene 19.

Da das erste Rad 21 mit dessen Spurkranz 30 auf den ersten Schienenkopf 27 aufklettert und erst anschließend hinab gleitet, während das zweite Rad 22 unmittelbar über dessen Lauffläche 29 von einem zweiten Schienenkopf 28 abgleitet, ist, am Ende einer Entgleisung des ersten Radsatzes 13, der insgesamt zurückgelegte erste Fallweg $s_{f1}$ größer als der insgesamt zurückgelegte zweite Fallweg $s_{f2}$.

Entsprechend ist ein erster Fallwegsgrenzwert $s_{g1}$ größer definiert als ein zweiter Fallwegsgrenzwert $s_{g2}$.

In der Recheneinheit 5 werden ein auch im Zusammenhang mit Fig. 3 beschriebener erster Vergleichsvorgang 6 zum Vergleich der ersten Fallgeschwindigkeit $v_{f1}$ und der zweiten Fallgeschwindigkeit $v_{f2}$ mit dem ersten Fallgeschwindigkeitsgrenzwert $v_{g1}$ und dem zweiten Fallgeschwindigkeitsgrenzwert $v_{g2}$ sowie ein ebenfalls auch im Zusammenhang mit Fig. 3 erläuterter zweiter Vergleichsvorgang 7 zum Vergleich des ersten Fallwegs $s_{f1}$ und des zweiten Fallwegs $s_{f2}$ mit dem ersten Fallwegsgrenzwert $s_{g1}$ und dem zweiten Fallwegsgrenzwert $s_{g2}$ durchgeführt.

Ein Entgleisungszustand des ersten Radsatzes 13 bzw. des Schienenfahrzeugs wird dabei dann detektiert, wenn die erste Fallgeschwindigkeit $v_{f1}$ betragsmäßig gleich oder größer ist als der erste Fallgeschwindigkeitsgrenzwert $v_{g1}$, die zweite Fallgeschwindigkeit $v_{f2}$ betragsmäßig gleich oder größer ist als der zweite Fallgeschwindigkeitsgrenzwert $v_{g2}$, der erste Fallweg $s_{f1}$ betragsmäßig gleich oder größer ist als der erste Fallwegsgrenzwert $s_{g1}$ und der zweite Fallweg $s_{f2}$ betragsmäßig gleich oder größer ist als der zweite Fallwegsgrenzwert $s_{g2}$.

Bei Einbeziehung des zweiten Vergleichsvorgangs 7 handelt es sich um eine besonders günstige Lösung. Erfindungsgemäß ist es jedoch auch denkbar, auf eine Bestimmung und Auswertung des ersten Fallwegs $s_{f1}$ und des zweiten Fallwegs $s_{f2}$ zu verzichten und einen Entgleisungszustand des Schienenfahrzeugs ausschließlich auf Grundlage des ersten Vergleichsvorgangs 6, d.h. auf Grundlage von Fallgeschwindigkeiten, zu detektieren.

Das erfindungsgemäße Verfahren ist selbstverständlich auch dazu eingerichtet, einen Entgleisungszustand des Schienenfahrzeugs zu detektieren, bei welchem das zweite Rad 22 in Richtung der Außenseite 24 des Gleises 25 entgleist und das erste Rad 21 in Richtung der Innenseite 26 des Gleises 25.

Fig. 3 offenbart ein Flussdiagramm einer beispielhaften Ausführungsvariante eines erfindungsgemäßen, teilweise computerimplementierten Verfahrens zur Entgleisungsdetektion für ein Schienenfahrzeug.

Von einem ersten Sensor 1 und einem zweiten Sensor 2, welche als Beschleunigungssensoren ausgeführt und, wie in Fig. 1 bzw. Fig. 2 gezeigt, auf einem Fahrwerk 16 des Schienenfahrzeugs angeordnet sind, werden Beschleunigungen in alle Raumrichtungen, d.h. auch normal zu einer, ebenfalls in Fig. 1 bzw. Fig. 2 gezeigten Schienenebene 19 erfasst.

Diese Beschleunigungen beziehen sich, wie in Fig. 2 gezeigt, auf einen ersten Radsatzendabschnitt 3 eines ersten Radsatzes 13 mit einem ersten Rad 21 und einem zweiten Rad 22 sowie einen zweiten Radsatzendabschnitt 4 des ersten Radsatzes 13 und werden, wie in Fig. 1 dargestellt, als Messsignale über eine erste Kabelleitung 20 und eine zweite Kabelleitung an eine in einem Wagenkasten 15 des Schienenfahrzeugs angeordnete Recheneinheit 5 übertragen.

In der Recheneinheit 5 erfolgt eine Signalverarbeitung 31 und eine Signalauswertung 32. Dabei werden aus den Messsignalen Beschleunigungsinformationen extrahiert und in Beschleunigungskomponenten, u. a. in eine Beschleunigungskomponente normal zu der Schienenebene 19 transformiert. Weiterhin werden über die Signalauswertung 32 die Messsignale gefiltert, um niederfrequente Störungen, welche beispielsweise von Driftserscheinungen und elektromagnetischen Einstreuungen verursacht sein können, zu eliminieren. Hierzu ist ein aus dem Stand der Technik bekannter Bessel- bzw. Hochpassfilter eingesetzt.

Von dem ersten Sensor 1 gemessene und auf den ersten Radsatzendabschnitt 3 bezogene Beschleunigungen normal zu der Schienenebene 19, erste z-Beschleunigungen $a_{z1}$, werden anschließend mittels eines ersten Integrationsvorgangs 8 nach einer ersten Bildungsvorschrift über eine Entgleisungsdauer $t_e$ integriert:

$$\int_{t_{01}}^{t_e} a_{z1} \cdot dt = \int_{v_{z01}}^{v_{f1}} dv_{z1}$$

Die erste Bildungsvorschrift umfasst neben der ersten z-Beschleunigung $a_{z1}$ und der Entgleisungsdauer $t_e$ weiterhin eine Zeit t, eine erste Startzeit $t_{01}$, eine erste z-Geschwindigkeit $v_{z1}$ des ersten Radsatzendabschnitts 3 normal zu der Schienenebene 19 sowie eine erste z-Startgeschwindigkeit $v_{z01}$ des ersten Radsatzendabschnitts 3 normal zu der Schienenebene 19. Die erste Startzeit $t_{01}$ und die erste z-Startgeschwindigkeit $v_{z01}$ werden entsprechend eingesetzt, z.B. zu Beginn des erfindungsgemäßen Verfahrens mit $t_{01} = 0$ und $v_{z01} = 0$, wobei natürlich auch andere Startwerte denkbar sind.

Der erste Integrationsvorgang 8 bezieht sich weiterhin auch auf eine zweite Bildungsvorschrift, nach welcher von dem zweiten Sensor 2 erfasste und auf den zweiten Radsatzendabschnitt 4 bezogene Beschleunigungen normal zu der Schienenebene 19, zweite z-Beschleunigungen $a_{z2}$, integriert werden:

$$\int_{t_{02}}^{t_e} a_{z2} \cdot dt = \int_{v_{z02}}^{v_{f2}} dv_{z2}$$

Die zweite Bildungsvorschrift umfasst neben der zweiten z-Beschleunigung $a_{z2}$ und der Entgleisungs-

dauer $t_e$ weiterhin die Zeit t, eine zweite Startzeit $t_{02}$, eine zweite z-Geschwindigkeit $v_{z2}$ des zweiten Radsatzendabschnitts 4 normal zu der Schienenebene 19 sowie eine zweite z-Startgeschwindigkeit $v_{z02}$ des zweiten Radsatzendabschnitts 4 normal zu der Schienenebene 19. Die zweite Startzeit $t_{02}$ und die zweite z-Startgeschwindigkeit $v_{z02}$ werden entsprechend eingesetzt, z. B. zu Beginn des erfindungsgemäßen Verfahrens mit $t_{02}$ = 0 und $v_{z02}$ = 0, wobei natürlich auch andere Startwerte denkbar sind.

Bei der Entgleisungsdauer $t_e$ handelt es sich um eine empirische Größe, welche mittels Simulationen und/oder Betriebsbeobachtungen aus einer Vielzahl von Analysen von Entgleisungsvorgängen von Schienenfahrzeugen ermittelt wird. Sie bezieht sich auf eine maximale Zeitdauer eines Entgleisungsvorgangs eines Rads.

Erfindungsgemäß ist es jedoch auch vorstellbar, die Entgleisungsdauer $t_e$ auf eine Zeitdauer zu beziehen, ab welcher mit Sicherheit von einer Entgleisung eines Rads ausgegangen werden kann, wobei diese Zeitdauer geringer ist als die maximale Zeitdauer eines Entgleisungsvorgangs. Weiterhin ist es denkbar, für die erste Bildungsvorschrift eine erste Entgleisungsdauer und für die zweite Bildungsvorschrift eine zweite Entgleisungsdauer vorzusehen, welche unterschiedliche Werte aufweisen.

Die Entgleisungsdauer $t_e$ beträgt in dieser beispielhaften Ausführungsvariante eines erfindungsgemäßen Verfahrens 3 s, wobei selbstverständlich auch andere Beträge vorstellbar sind.

Aus der ersten Vorschrift wird eine auf den ersten Radsatzendabschnitt 3 bezogene erste Fallgeschwindigkeit $v_{f1}$ ermittelt.

Aus der zweiten Vorschrift wird eine auf den zweiten Radsatzendabschnitt 4 bezogene zweite Fallgeschwindigkeit $v_{f2}$ bestimmt.

Weiterhin erfolgt ein zweiter Integrationsvorgang 9, mittels dessen aus der ersten Fallgeschwindigkeit $v_{f1}$ ein erster Fallweg $s_{f1}$ und aus der zweiten Fallgeschwindigkeit $v_{f2}$ ein zweiter Fallweg $s_{f2}$ bestimmt werden.

Eine dritte Bildungsvorschrift zur Bestimmung des ersten Fallwegs $s_{f1}$ mittels zeitfreier Integration lautet folgendermaßen:

$$\int_{s_{z01}}^{s_{f1}} a_{z1} \cdot ds_{z1} = \int_{v_{z01}}^{v_{f1}} v_{z1} \cdot dv_{z1}$$

Neben aus der ersten Bildungsvorschrift bereits bekannten Parametern umfasst die dritte Bildungsvorschrift einen ersten z-Weg $s_{z1}$ normal zu der Schienenebene 19 sowie einen ersten z-Startweg $s_{z01}$ des ersten Radsatzendabschnitts 3 normal zu der Schienenebene 19 als Integrationsgrenze, welcher zu Beginn des erfindungsgemäßen Verfahrens $s_{z01}$ = 0 gesetzt ist, wobei jedoch auch andere Startwerte denkbar sind.

Eine vierte Bildungsvorschrift zur Bestimmung des zweiten Fallwegs $s_{f2}$ mittels zeitfreier Integration lautet wie folgt:

$$\int_{s_{z02}}^{s_{f2}} a_{z2} \cdot ds_{z2} = \int_{v_{z02}}^{v_{f2}} v_{z2} \cdot dv_{z2}$$

Neben aus der zweiten Bildungsvorschrift und der dritten Bildungsvorschrift bereits bekannten Parametern umfasst die vierte Bildungsvorschrift einen zweiten z-Weg $s_{z2}$ des zweiten Radsatzendabschnitts 4 normal zu der Schienenebene 19 sowie einen zweiten z-Startweg $s_{z02}$ des zweiten Radsatzendabschnitts 4 normal zu der Schienenebene 19 als Integrationsgrenze, welcher zu Beginn des erfindungsgemäßen Verfahrens $s_{z02}$ = 0 gesetzt ist, wobei jedoch auch andere Startwerte denkbar sind.

Erfindungsgemäß ist es auch vorstellbar, anstatt der zeitfreien Integrationen zur Bildung des ersten Fallwegs $s_{f1}$ und des zweiten Fallwegs $s_{f2}$, den ersten Fallweg $s_{f1}$ und den zweiten Fallweg $s_{f2}$ über zweifachzeitliche Integrationen über die Entgleisungsdauer $t_e$ aus der ersten z-Beschleunigung $a_{z1}$ und der zweiten z-Beschleunigung $a_{z2}$ zu ermitteln.

Der erste Integrationsvorgang 8 mit der ersten Bildungsvorschrift und der zweiten Bildungsvorschrift sowie der zweite Integrationsvorgang 9 mit der dritten Bildungsvorschrift und der vierten Bildungsvorschrift werden mittels der Recheneinheit 5 numerisch durchgeführt, wobei für die erste z-Geschwindigkeit $v_{z1}$, die zweite z-Geschwindigkeit $v_{z2}$, den ersten z-Weg $s_{z1}$ und den zweiten z-Weg $s_{z2}$ je Zeitschritt Zwischenergebnisse gebildet werden, welche wiederum als erste z-Startgeschwindigkeit $v_{z01}$, zweite z-Startgeschwindigkeit $v_{z02}$, erster z-Startweg $s_{z01}$ und zweiter s-Startweg $s_{z02}$ für einen zeitlich auf einen ersten Integrationsdurchgang folgenden zweiten Integrationsdurchgang eingesetzt werden.

Oben genannte Zwischenergebnisse werden in dieser beispielhaften Ausführungsvariante eines erfindungsgemäßen Verfahrens auch zur Detektion von Entgleisungszuständen des Schienenfahrzeugs eingesetzt, d.h. mit einem ersten Fallgeschwindigkeitsgrenzwert $v_{g1}$, einem zweiten Fallgeschwindigkeitsgrenzwert $v_{g2}$, einem ersten Fallwegsgrenzwert $s_{g1}$ und einem zweiten Fallwegsgrenzwert $s_{g2}$ verglichen, und werden daher ebenfalls als erste Fallgeschwindigkeiten $v_{f1}$, zweite Fallgeschwindigkeiten $v_{f2}$, erste Fallwege $s_{f1}$ und zweite Fallwege $s_{f2}$ betrachtet.

Es wird ein erster Vergleichsvorgang 6 durchgeführt, bei welchem die erste Fallgeschwindigkeit $v_{f1}$ mit dem ersten Fallgeschwindigkeitsgrenzwert $v_{g1}$ sowie dem zweiten Fallgeschwindigkeitsgrenzwert $v_{g2}$ verglichen wird und die zweite Fallgeschwindigkeit $v_{f2}$ ebenfalls mit dem ersten Fallgeschwindigkeitsgrenzwert $v_{g1}$ sowie dem zweiten Fallgeschwindigkeitsgrenzwert $v_{g2}$

verglichen wird.

Der erste Fallgeschwindigkeitsgrenzwertwert $v_{g1}$ mit einem Betrag von 3 m/s bezieht sich, wie in Fig. 2 gezeigt, auf eine Entgleisung des ersten Rads 21 in Richtung einer Außenseite 24 eines Gleises 25, und ist kleiner als der zweite Fallgeschwindigkeitsgrenzwert $v_{g2}$, welcher sich, wie ebenfalls in Fig. 2 dargestellt, auf eine Entgleisung des zweiten Rads 22 in Richtung einer Innenseite 26 des Gleises 25 bezieht und 4 m/s beträgt.

Der erste Fallgeschwindigkeitsgrenzwert $v_{g1}$ und der zweite Fallgeschwindigkeitsgrenzwert $v_{g2}$ werden empirisch mittels Simulationen und/oder Betriebsbeobachtungen aus einer Vielzahl von Analysen von Entgleisungsvorgängen von Schienenfahrzeugen ermittelt. Abhängig von dem Schienenfahrzeug und dessen Betrieb sowie von einer Bahninfrastruktur können verschiedene Beträge, d.h. auch andere Beträge als die oben angeführten, für den ersten Fallgeschwindigkeitsgrenzwert $v_{g1}$ und den zweiten Fallgeschwindigkeitsgrenzwert $v_{g2}$ eingesetzt werden.

Darüber hinaus erfolgt ein zweiter Vergleichsvorgang 7, bei welchem der erste Fallweg $s_{f1}$ mit dem ersten Fallwegsgrenzwert $s_{g1}$ sowie dem zweiten Fallwegsgrenzwert $s_{g2}$ verglichen wird und der zweite Fallweg $s_{f2}$ ebenfalls mit dem ersten Fallwegsgrenzwert $s_{g1}$ und dem zweiten Fallwegsgrenzwert $s_{g2}$ verglichen wird.

Der erste Fallwegsgrenzwert $s_{g1}$ beträgt in dieser beispielhaften Ausführungsvariante eines erfindungsgemäßen Verfahrens 210 mm und bezieht sich auf eine Entgleisung des ersten Rads 21 in Richtung der Außenseite 24 des Gleises 25, während sich der zweite Fallwegsgrenzwert $s_{g2}$, welcher in dieser beispielhaften Ausführungsvariante eines erfindungsgemäßen Verfahrens 180 mm beträgt, auf eine Entgleisung des zweiten Rads 22 in Richtung der Innenseite 26 des Gleises 25 bezieht.

Der zweite Fallwegsgrenzwert $s_{g2}$ ist aus einer Schienenhöhe bestimmt, der erste Fallwegsgrenzwert $s_{g1}$ darüber hinaus noch aus einer Rad-Spurkranzhöhe.

Abhängig von Schienenfahrzeug und Infrastruktur können natürlich auch andere Beträge als die oben angeführten für den ersten Fallwegsgrenzwert $s_{g1}$ und den zweiten Fallwegsgrenzwert $s_{g2}$ eingesetzt werden.

Die erste Fallgeschwindigkeit $v_{f1}$, die zweite Fallgeschwindigkeit $v_{f2}$ sowie der erste Fallweg $s_{f1}$ und der zweite Fallweg $s_{f2}$ definieren Bewegungen nach unten und sind mit positiven Vorzeichen definiert. Der erste Fallgeschwindigkeitsgrenzwert $v_{g1}$, der zweite Fallgeschwindigkeitsgrenzwert $v_{g2}$, der erste Fallwegsgrenzwert $s_{g1}$ und der zweite Fallwegsgrenzwert $s_{g2}$ sind ebenfalls mit positiven Vorzeichen definiert.

Ein Entgleisungszustand des Schienenfahrzeugs wird dann detektiert, wenn die erste Fallgeschwindigkeit $v_{f1}$ betragsmäßig gleich oder größer ist als der erste Fallgeschwindigkeitsgrenzwert $v_{g1}$, die zweite Fallgeschwindigkeit $v_{f2}$ betragsmäßig gleich oder größer ist als der zweite Fallgeschwindigkeitsgrenzwert $v_{g2}$, der erste Fallweg $s_{f1}$ betragsmäßig gleich oder größer ist als der erste Fallwegsgrenzwert $s_{g1}$ und der zweite Fallweg $s_{f2}$ betragsmäßig gleich oder größer ist als der zweite Fallwegsgrenzwert $s_{g2}$.

Demzufolge wird ein Entgleisungszustand des Schienenfahrzeugs auch dann detektiert, wenn neben der zweiten Fallgeschwindigkeit $v_{f2}$ auch die erste Fallgeschwindigkeit $v_{f1}$ betragsmäßig gleich oder größer ist als der zweite Fallgeschwindigkeitsgrenzwert $v_{g2}$ und/oder neben dem ersten Fallweg $s_{f1}$ auch der zweite Fallweg $s_{f2}$ gleich oder größer ist als der erste Fallwegsgrenzwert $s_{g1}$.

Über den ersten Vergleichsvorgang 6 bzw. den zweiten Vergleichsvorgang 7 hinaus muss für eine Detektion eines Entgleisungszustands des Schienenfahrzeugs ein Erreichen bzw. Überschreiten des ersten Fallgeschwindigkeitsgrenzwerts $v_{g1}$ und des zweiten Fallgeschwindigkeitsgrenzwerts $v_{g2}$ bzw. des ersten Fallwegsgrenzwerts $s_{g1}$ und des zweiten Fallwegsgrenzwerts $s_{g2}$ durch die erste Fallgeschwindigkeit $v_{f1}$ und die zweite Fallgeschwindigkeit $v_{f2}$ bzw. den ersten Fallweg $s_{f1}$ und den zweiten Fallweg $s_{f2}$ innerhalb einer Übergangszeit $t_u$ und innerhalb einer mit der Übergangszeit $t_u$ korrelierenden Übergangswegstrecke $s_u$ des Schienenfahrzeugs erfolgen. Eine Entgleisung des ersten Rads 21 muss demnach mit einer Entgleisung des zweiten Rads 22 zeitlich und örtlich gekoppelt sein.

Die Übergangszeit $t_u$ wird empirisch mittels Simulationen und/oder Betriebsbeobachtungen aus einer Vielzahl von Analysen von Entgleisungsvorgängen von Schienenfahrzeugen ermittelt. Die Übergangswegstrecke $s_u$ wird aus Multiplikation einer Fahrgeschwindigkeit des Schienenfahrzeugs mit der Übergangszeit $t_u$ ermittelt.

In dieser beispielhaften Ausführungsvariante eines erfindungsgemäßen Verfahrens wird eine Übergangszeit $t_u$ von 10 s eingesetzt, wobei erfindungsgemäß auch andere Beträge für die Übergangszeit $t_u$ denkbar sind.

Sind beispielsweise sowohl die erste Fallgeschwindigkeit $v_{f1}$ als auch die zweite Fallgeschwindigkeit $v_{f2}$ kleiner als der zweite Fallgeschwindigkeitsgrenzwert $v_{g2}$ und/oder sowohl der erste Fallweg $s_{f1}$ als auch der zweite Fallweg $s_{f2}$ kleiner als der erste Fallwegsgrenzwert $s_{g1}$, so liegt kein Entgleisungszustand des Schienenfahrzeugs vor und wird kein Entgleisungszustand detektiert.

Weiterhin liegt beispielsweise kein Entgleisungszustand vor und wird kein Entgleisungszustand detektiert, wenn die erste Fallgeschwindigkeit $v_{f1}$ oder die zweite Fallgeschwindigkeit $v_{f2}$ kleiner ist als der erste Fallgeschwindigkeitsgrenzwert $v_{g1}$ und/oder der erste Fallweg $s_{f1}$ oder der zweite Fallweg $s_{f2}$ kleiner ist als der zweite Fallwegsgrenzwert $s_{g2}$.

Es ist natürlich möglich, dass jene Seite des ersten Radsatzes 13 mit dem ersten Radsatzendabschnitt 3 bzw. das erste Rad 21 in Richtung der Innenseite 26 des Gleises 25 entgleist und jene Seite des ersten Radsatzes 13 mit dem zweiten Radsatzendabschnitt 4 bzw. das zweite Rad 22 in Richtung der Außenseite 24 des Gleises 25, d.h. umgekehrt, wie für diese beispielhafte Ausführungsvariante eines erfindungsgemäßen Verfahrens dargestellt. Zur Überprüfung eines derartigen Szenarios, welche in dem erfindungsgemäßen Szenario ebenfalls immer durchgeführt wird, wird der zweite Radsatzendabschnitt 4 als der erste Radsatzendabschnitt 3 betrachtet und der erste Radsatzendabschnitt 3 als der zweite Radsatzendabschnitt 4. Die Überprüfung dieses Szenarios wird nach jenem im Zusammenhang mit Fig. 3 beschriebenen Schema durchgeführt.

Bei Einbeziehung des zweiten Vergleichsvorgangs 7 in das erfindungsgemäße Verfahren handelt es sich um eine besonders günstige Lösung. Erfindungsgemäß ist es jedoch auch denkbar, auf eine Bestimmung und Auswertung des ersten Fallwegs $s_{f1}$ und des zweiten Fallwegs $s_{f2}$ zu verzichten und einen Entgleisungszustand des Schienenfahrzeugs ausschließlich auf Grundlage des ersten Vergleichsvorgangs 6 zu detektieren.

Messungen der Beschleunigungen, die Signalverarbeitung 31, die Signalauswertung 32, der erste Integrationsvorgang 8, der zweite Integrationsvorgang 9, der erste Vergleichsvorgang 6, der zweite Vergleichsvorgang 7, für einzelne Verfahrensschritte erforderliche Datenübertragungen sowie eine Erzeugung von Informationen über einen etwaigen Entgleisungszustand des ersten Radsatzes 13 bzw. des Schienenfahrzeugs werden kontinuierlich während eines Betriebs des Schienenfahrzeugs mit einer Frequenz von 10 Hz durchgeführt.

Erfindungsgemäß ist es natürlich auch möglich, eine andere Frequenz vorzusehen, die Frequenz zu variieren oder unterschiedliche Verfahrensschritte mit unterschiedlichen Frequenzen durchzuführen.

Verfahrensschritte wie z.B. der erste Integrationsvorgang 8 und der zweite Integrationsvorgang 9 oder der erste Vergleichsvorgang 6 und der zweite Vergleichsvorgang 7 können zeitlich sequentiell oder zeitlich parallel durchgeführt werden.

Bei einem detektierten Entgleisungszustand wird eine Zwangsbremsung des Schienenfahrzeugs ausgelöst (Zwangsbremsauslösung 33). Hierzu ist die Recheneinheit 5 mit einer nicht gezeigten Bremsvorrichtung des Schienenfahrzeugs, für diese beispielhafte Ausführungsvariante eines erfindungsgemäßen Verfahrens mit einem Bremssteuergerät, verbunden.

Weiterhin weist das Schienenfahrzeug eine nicht dargestellte Fahrzeugantenne auf, mit welcher die Recheneinheit 5 verbunden ist und über welche Informationen über einen Entgleisungszustand des Schienenfahrzeugs an eine nicht gezeigte infrastrukturseitige Einrichtung, für diese beispielhafte Ausführungsvariante eines erfindungsgemäßen Verfahrens an eine Leitzentrale, übertragen werden.

Erfindungsgemäß ist es auch denkbar, die Recheneinheit 5 über entsprechende Leitungswege mit einer Ausgabeeinheit, d.h. z.B. mit einer Anzeige und/oder einem Audiosystem, in einem Führerstand des Schienenfahrzeugs zu verbinden und Informationen über einen Entgleisungszustand visuell und/oder akustisch an einen Triebfahrzeugführer auszugeben.

Das erfindungsgemäße Verfahren kann selbstverständlich sowohl für Schienenfahrzeuge mit Radsatz-Fahrwerken als auch für Schienenfahrzeuge mit Losrad-Fahrwerken bzw. Losradsätzen, wie sie beispielsweise für Niederflurstraßenbahnen vorgesehen sind, eingesetzt werden. Es ist keine mechanische Kopplung zwischen dem ersten Rad 21 und dem zweiten Rad 22 erforderlich.

Liste der Bezeichnungen

| 1 | Erster Sensor |
|---|---|
| 2 | Zweiter Sensor |
| 3 | Erster Radsatzendabschnitt |
| 4 | Zweiter Radsatzendabschnitt |
| 5 | Recheneinheit |
| 6 | Erster Vergleichsvorgang |
| 7 | Zweiter Vergleichsvorgang |
| 8 | Erster Integrationsvorgang |
| 9 | Zweiter Integrationsvorgang |
| 10 | Erstes Radsatzlagergehäuse |
| 11 | Zweites Radsatzlagergehäuse |
| 12 | Drittes Radsatzlagergehäuse |
| 13 | Erster Radsatz |
| 14 | Zweiter Radsatz |
| 15 | Wagenkasten |
| 16 | Fahrwerk |
| 17 | Fahrwerksrahmen |
| 18 | Sekundärfedervorrichtung |
| 19 | Schienenebene |
| 20 | Erste Kabelleitung |
| 21 | Erstes Rad |
| 22 | Zweites Rad |
| 23 | Radsatzwelle |
| 24 | Außenseite |
| 25 | Gleis |
| 26 | Innenseite |
| 27 | Erster Schienenkopf |
| 28 | Zweiter Schienenkopf |
| 29 | Lauffläche |
| 30 | Spurkranz |
| 31 | Signalverarbeitung |
| 32 | Signalauswertung |
| 33 | Zwangsbremsauslösung |
| $v_{f1}$ | Erste Fallgeschwindigkeit |
| $v_{f2}$ | Zweite Fallgeschwindigkeit |
| $v_{g1}$ | Erster Fallgeschwindigkeitsgrenzwert |
| $v_{g2}$ | Zweiter Fallgeschwindigkeitsgrenzwert |
| $s_{f1}$ | Erster Fallweg |
| $s_{f2}$ | Zweiter Fallweg |
| $s_{g1}$ | Erster Fallwegsgrenzwert |

$s_{g2}$     Zweiter Fallwegsgrenzwert
$t_u$     Übergangszeit
$s_u$     Übergangswegstrecke
$t_e$     Entgleisungsdauer
$a_{z1}$     Erste z-Beschleunigung
$a_{z2}$     Zweite z-Beschleunigung
$t$     Zeit
$t_{01}$     Erste Startzeit
$t_{02}$     Zweite Startzeit
$v_{z1}$     Erste z-Geschwindigkeit
$v_{z2}$     Zweite z-Geschwindigkeit
$v_{z01}$     Erste z-Startgeschwindigkeit
$v_{z2}$     Zweite z-Startgeschwindigkeit
$s_{z1}$     Erster z-Weg
$s_{z2}$     Zweiter z-Weg
$s_{z01}$     Erster z-Startweg
$s_{z02}$     Zweiter z-Startweg

**Patentansprüche**

1. Verfahren zur Detektion eines Entgleisungszustands eines Schienenfahrzeugs, wobei zumindest eine kinematische Größe mittels eines ersten Sensors bezüglich eines ersten Radsatzendabschnitts und mittels eines zweiten Sensors bezüglich eines zweiten Radsatzendabschnitts gemessen wird und entsprechende Messsignale gebildet, verarbeitet sowie ausgewertet werden, **dadurch gekennzeichnet, dass** mittels zumindest einer Recheneinheit (5) aus den Messsignalen Werte einer ersten Fallgeschwindigkeit ($v_{f1}$) bezüglich des ersten Radsatzendabschnitts (3) und Werte einer zweiten Fallgeschwindigkeit ($v_{f2}$) bezüglich des zweiten Radsatzendabschnitts (4) gebildet werden und mittels eines ersten Vergleichsvorgangs (6) der ersten Fallgeschwindigkeit ($v_{f1}$) und der zweiten Fallgeschwindigkeit ($v_{f2}$) mit einem ersten Fallgeschwindigkeitsgrenzwert ($v_{g1}$) und einem zweiten Fallgeschwindigkeitsgrenzwert ($v_{g2}$), welcher betragsmäßig größer ist als der erste Fallgeschwindigkeitsgrenzwert ($v_{g1}$), ein Entgleisungszustand des Schienenfahrzeugs zumindest dann detektiert wird, wenn die erste Fallgeschwindigkeit ($v_{f1}$) betragsmäßig gleich oder größer ist als der erste Fallgeschwindigkeitsgrenzwert ($v_{g1}$) und die zweite Fallgeschwindigkeit ($v_{f2}$) betragsmäßig gleich oder größer ist als der zweite Fallgeschwindigkeitsgrenzwert ($v_{g2}$).

2. Verfahren nach Anspruch 1, **dadurch gekennzeichnet, dass** mittels der zumindest einen Recheneinheit (5) aus den Messsignalen Werte eines erster Fallwegs ($s_{f1}$) bezüglich des ersten Radsatzendabschnitts (3) und Werte eines zweiten Fallwegs ($s_{f2}$) bezüglich des zweiten Radsatzendabschnitts (4) gebildet werden und mittels eines zweiten Vergleichsvorgangs (7) des ersten Fallwegs ($s_{f1}$) und des zweiten Fallwegs ($s_{f2}$) mit einem ersten Fallwegsgrenzwert ($s_{g1}$) und einem zweiten Fallwegsgrenzwert ($s_{g2}$), welcher betragsmäßig kleiner ist als der erste Fallwegsgrenzwert ($s_{g1}$), ein Entgleisungszustand des Schienenfahrzeugs zumindest dann detektiert wird, wenn der erste Fallweg ($s_{f1}$) betragsmäßig gleich oder größer ist als der erste Fallwegsgrenzwert ($s_{g1}$) und der zweite Fallweg ($s_{f2}$) betragsmäßig gleich oder größer ist als der zweite Fallwegsgrenzwert ($s_{g2}$).

3. Verfahren nach Anspruch 1 oder 2, **dadurch gekennzeichnet, dass** ein Entgleisungszustand des Schienenfahrzeugs zumindest dann detektiert wird, wenn ein Erreichen oder ein Überschreiten des ersten Fallgeschwindigkeitsgrenzwerts ($v_{g1}$) und des zweiten Fallgeschwindigkeitsgrenzwerts ($v_{g2}$) durch die erste Fallgeschwindigkeit ($v_{f1}$) und die zweite Fallgeschwindigkeit ($v_{f2}$) innerhalb einer Übergangszeit ($t_u$) oder innerhalb einer Übergangswegstrecke ($s_u$) erfolgt.

4. Verfahren nach Anspruch 2 oder 3, **dadurch gekennzeichnet, dass** ein Entgleisungszustand des Schienenfahrzeugs dann detektiert wird, wenn ein Erreichen oder ein Überschreiten des ersten Fallwegsgrenzwerts ($s_{g1}$) und des zweiten Fallwegsgrenzwerts ($s_{g2}$) durch den ersten Fallweg ($s_{f1}$) und den zweiten Fallweg ($s_{f2}$) innerhalb der Übergangszeit ($t_u$) oder innerhalb der Übergangswegstrecke ($s_u$) erfolgt.

5. Verfahren nach einem der Ansprüche 1 bis 4, **dadurch gekennzeichnet, dass** zumindest die erste Fallgeschwindigkeit ($v_{f1}$) mittels eines ersten Integrationsvorgangs (8) einer Beschleunigung über eine Entgleisungsdauer ($t_e$) ermittelt wird.

6. Verfahren nach einem der Ansprüche 2 bis 5, **dadurch gekennzeichnet, dass** zumindest der erste Fallweg ($s_{f1}$) mittels eines zweiten Integrationsvorgangs (9) ermittelt wird.

7. Verfahren nach Anspruch 6, **dadurch gekennzeichnet, dass** der zweite Integrationsvorgang (9) als zeitfreie Integration durchgeführt wird.

8. Verfahren nach einem der Ansprüche 1 bis 7, **dadurch gekennzeichnet, dass** eine Zwangsbremsung des Schienenfahrzeugs ausgelöst wird, wenn ein Entgleisungszustand des Schienenfahrzeugs detektiert wird.

9. Verfahren nach einem der Ansprüche 1 bis 8, **dadurch gekennzeichnet, dass** Informationen über einen Entgleisungszustand des Schienenfahrzeugs mittels Funk von dem Schienenfahrzeug an eine infrastrukturseitige Einrichtung übertragen werden.

**10.** Verfahren nach einem der Ansprüche 1 bis 9, **dadurch gekennzeichnet, dass** Informationen über einen Entgleisungszustand des Schienenfahrzeugs an einen Führerstand des Schienenfahrzeugs übertragen und in dem Führerstand ausgegeben werden.

**11.** Vorrichtung zur Detektion eines Entgleisungszustands eines Schienenfahrzeugs, aufweisend einen ersten Sensor (1), der auf einem ersten Radsatzlagergehäuse (10) eines ersten Radsatzes (13) des Schienenfahrzeugs vorgesehen ist, einen zweiten Sensor (2), der auf einem zweiten Radsatzlagergehäuse (11) des ersten Radsatzes (13) anordenbar ist und zumindest eine Recheneinheit (5), die in oder auf einem Wagen des Schienenfahrzeugs vorgesehen ist, wobei zwischen dem ersten Sensor (1) und dem zweiten Sensor (2) einerseits und der zumindest einen Recheneinheit (5) andererseits signalübertragende Verbindungen vorgesehen sind, wobei die Vorrichtung dazu ausgebildet ist ein Verfahren nach einem der Ansprüche 1 bis 10 durchzuführen.

**12.** Vorrichtung nach Anspruch 11, **dadurch gekennzeichnet, dass** die zumindest eine Recheneinheit (5) mit einer Bremsvorrichtung des Schienenfahrzeugs verbunden ist.

**13.** Vorrichtung nach Anspruch 11 oder 12, **dadurch gekennzeichnet, dass** die zumindest eine Recheneinheit (5) mit einer Fahrzeugantenne des Schienenfahrzeugs verbunden ist.

**14.** Vorrichtung nach einem der Ansprüche 11 bis 13, **dadurch gekennzeichnet, dass** die zumindest eine Recheneinheit (5) mit einer Ausgabeeinheit verbunden ist, auf welcher Informationen über einen Entgleisungszustand des Schienenfahrzeugs ausgebbar sind.

**15.** Vorrichtung nach einem der Ansprüche 11 bis 14, **dadurch gekennzeichnet, dass** zumindest der erste Sensor (1) als Beschleunigungssensor ausgebildet ist.

**16.** Vorrichtung nach einem der Ansprüche 11 bis 14, **dadurch gekennzeichnet, dass** zumindest der erste Sensor (1) als Abstandssensor ausgebildet ist.

**17.** Vorrichtung nach einem der Ansprüche 11 bis 14, **dadurch gekennzeichnet, dass** zumindest der erste Sensor (1) als Geschwindigkeitssensor ausgebildet ist.

## Claims

**1.** Method for detecting a derailment state of a rail vehicle, wherein at least one kinematic variable is measured by means of a first sensor with respect to a first wheelset end portion and by means of a second sensor with respect to a second wheelset end portion and corresponding measurement signals are formed, processed and evaluated, **characterised in that** values of a first falling velocity ($v_{f1}$) with respect to the first wheelset end portion (3) and values of a second falling velocity ($v_{f2}$) with respect to the second wheelset end portion (4) are calculated from the measurement signals by means of at least one computing unit (5) and a derailment state of the rail vehicle is detected by means of a first comparison operation (6) of the first falling velocity ($v_{f1}$) and the second falling velocity ($v_{f2}$) with a first falling velocity limit value ($v_{g1}$) and a second falling velocity limit value ($v_{g2}$), which is greater than the first falling velocity limit value ($v_{g1}$), at least when the first falling velocity ($v_{f1}$) is equal to or greater than the first falling velocity limit value ($v_{g1}$) and the second falling velocity ($v_{f2}$) is equal to or greater than the second falling velocity limit value ($v_{g2}$).

**2.** Method according to claim 1, **characterised in that** values of a first fall distance ($s_{f1}$) with respect to the first wheelset end portion (3) and values of a second fall distance ($s_{f2}$) with respect to the second wheelset end portion (4) are calculated from the measurement signals by means of at least one computing unit (5) and a derailment state of the rail vehicle is detected by means of a second comparison operation (7) of the first fall distance ($s_{f1}$) and the second fall distance ($s_{f2}$) with a first fall distance limit value ($s_{g1}$) and a second fall distance limit value ($s_{g2}$), which is smaller than the first fall distance limit value ($s_{g1}$), at least when the first fall distance ($s_{f1}$) is equal to or greater than the first fall distance limit value ($s_{g1}$) and the second fall distance ($s_{f2}$) is equal to or greater than the second fall distance limit value ($s_{g2}$).

**3.** Method according to claim 1 or 2, **characterised in that** a derailment state of the rail vehicle is detected at least when the first falling velocity limit value ($v_{g1}$) and the second falling velocity limit value ($v_{g2}$) are reached or exceeded by the first falling velocity ($v_{f1}$) and the second falling velocity ($v_{f2}$) within a transition time ($t_u$) or within a transition section distance ($s_u$).

**4.** Method according to claim 2 or 3, **characterised in that** a derailment state of the rail vehicle is detected when the first fall distance limit value ($s_{g1}$) and the second fall distance limit value ($s_{g2}$) are reached or exceeded by the first fall distance ($s_{f1}$) and the second fall distance ($s_{f2}$) within the transition time ($t_u$) or within the transition section distance ($s_u$).

**5.** Method according to one of claims 1 to 4, **characterised in that** at least the first falling velocity ($v_{f2}$) is determined by means of a first integration process (8) of an acceleration over a derailment period ($t_e$).

6. Method according to one of claims 2 to 5, **characterised in that** at least the first fall distance ($s_{f1}$) is determined by means of a second integration process (9).

7. Method according to claim 6, **characterised in that** the second integration process (9) is carried out as a time-free integration.

8. Method according to one of claims 1 to 7, **characterised in that** emergency braking of the rail vehicle is triggered when a derailment state of the rail vehicle is detected.

9. Method according to one of claims 1 to 8, **characterised in that** information about a derailment state of the rail vehicle is transmitted by radio from the rail vehicle to a facility on the infrastructure side.

10. Method according to one of claims 1 to 9, **characterised in that** information about a derailment state of the rail vehicle is transmitted to a driver's cab of the rail vehicle and output in the driver's cab.

11. Apparatus for detecting a derailment state of a rail vehicle, having a first sensor (1) which is provided on a first wheelset bearing housing (10) of a first wheelset (13) of the rail vehicle, a second sensor (2) which can be arranged on a second wheelset bearing housing (11) of the first wheelset (13) and at least one computing unit (5) which is provided in or on a railcar of the rail vehicle, wherein signal-transmitting connections are provided between the first sensor (1) and the second sensor (2) on the one hand and the at least one computing unit (5) on the other hand, wherein the apparatus is designed to perform a method according to one of claims 1 to 10.

12. Apparatus according to claim 11, **characterised in that** at least one computing unit (5) is connected to a brake apparatus of the rail vehicle.

13. Apparatus according to claim 11 or 12, **characterised in that** at the least one computing unit (5) is connected to a vehicle antenna of the rail vehicle.

14. Apparatus according to one of claims 11 to 13, **characterised in that** at least one computing unit (5) is connected to an output unit on which information about a derailment state of the rail vehicle can be output.

15. Apparatus according to one of claims 11 to 14, **characterised in that** at least the first sensor (1) is designed as an acceleration sensor.

16. Apparatus according to one of claims 11 to 14, **characterised in that** at least the first sensor (1) is designed as a distance sensor.

17. Apparatus according to one of claims 11 to 14, **characterised in that** at least the first sensor (1) is designed as a velocity sensor.

**Revendications**

1. Procédé de détection d'un état de déraillement d'un véhicule ferroviaire, dans lequel au moins une grandeur cinématique est mesurée au moyen d'un premier capteur par rapport à un premier tronçon d'essieu et au moyen d'un second capteur par rapport à un second tronçon d'essieu, et des signaux de mesure correspondants sont obtenus, traités et évalués, **caractérisé en ce qu'**au moyen d'au moins une unité de calcul (5), à partir des signaux de mesure, des valeurs, d'une première vitesse de chute ($v_{f1}$) par rapport au premier tronçon d'essieu (3) et des valeurs d'une seconde vitesse de chute ($v_{f2}$) par rapport au second tronçons d'essieu (4) sont obtenues, et au moyen d'une première opération de comparaison (6) de la première vitesse de chute ($v_{f1}$) et de la seconde vitesse de chute ($v_{f2}$) à une première valeur de limite de vitesse de chute ($v_{g1}$) et à une seconde valeur de limite de vitesse de chute ($v_{g2}$), dont la valeur est supérieure à la première valeur de limite de vitesse de chute ($v_{g1}$), un état de déraillement du véhicule ferroviaire est détecté au moins lorsque la valeur de la première vitesse de chute ($v_{f1}$) est égale ou supérieure à la première valeur de limite de vitesse de chute ($v_{g1}$) et la valeur de la seconde vitesse de chute ($v_{f2}$) est égale ou supérieure à la seconde valeur de limite de vitesse de chute ($v_{g2}$).

2. Procédé selon la revendication 1, **caractérisé en ce qu'**au moyen de la au moins une unité de calcul (5), à partir des signaux de mesure, des valeurs d'une première course de chute ($s_{f1}$) par rapport au premier tronçon d'essieu (3) et des valeurs d'une seconde course de chute ($s_{f2}$) par rapport au second tronçon d'essieu (4) sont obtenues, et au moyen d'une seconde opération de comparaison (7) de la première course de chute ($s_{f1}$) et de la seconde course de chute ($s_{f2}$) avec une première valeur de limite de course de chute ($s_{g1}$) et une seconde valeur de limite de course de chute ($s_{g2}$), dont la valeur est inférieure à la première valeur de limite de course de chute ($s_{g1}$), un état de déraillement du véhicule ferroviaire est détecté au moins lorsque la valeur de la première course de chute ($s_{f1}$) est égale ou supérieure à la première valeur de limite de course de chute ($s_{g1}$) et la valeur de la seconde course de chute ($s_{f2}$) est égale ou supérieure à la seconde valeur de limite de course de chute ($s_{g2}$).

3. Procédé selon la revendication 1 ou 2, **caractérisé en ce qu'**un état de déraillement du véhicule ferroviaire est détecté au moins lorsque la première valeur de limite de vitesse de chute ($v_{g1}$) et la seconde valeur de limite de vitesse de chute ($v_{g2}$) sont atteintes ou dépassées par la première vitesse de chute ($v_{f1}$) et la seconde vitesse de chute ($v_{f2}$) pendant une durée de transition ($t_u$) ou pendant un trajet de transition ($s_u$).

4. Procédé selon la revendication 2 ou 3, **caractérisé en ce qu'**un état de déraillement du véhicule ferroviaire est détecté lorsque la première valeur de limite de course de chute ($s_{g1}$) et la seconde valeur de limite de course de chute ($s_{g2}$) sont atteintes ou dépassées par la première course de chute ($s_{f1}$) et la seconde course de chute ($s_{f2}$) pendant la durée de transition ($t_u$) ou pendant le trajet de transition ($s_u$).

5. Procédé selon l'une quelconque des revendications 1 à 4, **caractérisé en ce qu'**au moins la première vitesse de chute ($v_{f1}$) est déterminée au moyen d'une première opération d'intégration (8) d'une accélération sur une durée de déraillement ($t_e$).

6. Procédé selon l'une quelconque des revendications 2 à 5, **caractérisé en ce qu'**au moins la première course de chute ($s_{f1}$) est déterminée au moyen d'une seconde opération d'intégration (9).

7. Procédé selon la revendication 6, **caractérisé en ce que** la seconde opération d'intégration (9) est réalisée en tant qu'intégration sans durée.

8. Procédé selon l'une quelconque des revendications 1 à 7, **caractérisé en ce qu'**un freinage forcé du véhicule ferroviaire est déclenché lorsqu'un état de déraillement du véhicule ferroviaire est détecté.

9. Procédé selon l'une quelconque des revendications 1 à 8, **caractérisé en ce que** des informations sur un état de déraillement du véhicule ferroviaire sont transmises par radio depuis le véhicule ferroviaire à un dispositif côté infrastructure.

10. Procédé selon l'une quelconque des revendications 1 à 9, **caractérisé en ce que** des informations concernant un état de déraillement du véhicule ferroviaire sont transmises à une cabine de conduite du véhicule ferroviaire et sont émises dans la cabine de conduite.

11. Dispositif permettant de détecter un état de déraillement d'un véhicule ferroviaire, comprenant un premier capteur (1), qui est prévu sur un premier boîtier de palier d'essieu (10) d'un premier ensemble de roues (13) du véhicule ferroviaire, un second capteur (2), qui peut être disposé sur un second boîtier de palier d'essieu (11) du premier ensemble de roues (13), au moins une unité de calcul (5), qui est prévue dans ou sur une voiture du véhicule ferroviaire, dans lequel entre le premier capteur (1) et le second capteur (2), d'une part, et la au moins une unité de calcul (5), d'autre part, sont prévues des connexions transmettant des signaux, le dispositif étant conçu afin d'exécuter un procédé selon l'une quelconque des revendications 1 à 10.

12. Dispositif selon la revendication 11, **caractérisé en ce que** la au moins une unité de calcul (5) est reliée à un dispositif de freinage du véhicule ferroviaire.

13. Dispositif selon la revendication 11 ou 12, **caractérisé en ce que** la au moins une unité de calcul (5) est reliée à une antenne de véhicule du véhicule ferroviaire.

14. Dispositif selon l'une quelconque des revendications 11 à 13, **caractérisé en ce que** la au moins une unité de calcul (5) est reliée à une unité de sortie sur laquelle des informations sur un état de déraillement du véhicule ferroviaire peuvent être délivrées.

15. Dispositif selon l'une des revendications 11 à 14, **caractérisé en ce qu'**au moins le premier capteur (1) est réalisé sous la forme de capteur d'accélération.

16. Dispositif selon l'une des revendications 11 à 14, **caractérisé en ce qu'**au moins le premier capteur (1) est réalisé sous la forme de capteur de distance.

17. Dispositif selon l'une des revendications 11 à 14, **caractérisé en ce qu'**au moins le premier capteur (1) est réalisé sous la forme de capteur de vitesse.

## FIG 1

## FIG 2

# FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004101343 A1
- DE 19953677 C1